# EUROPÄISCHE PATENTANMELDUNG

(11) **EP 2 043 021 A1**
(43) Veröffentlichungstag der Anmeldung: **01.04.2009**
(21) Anmeldenummer: 08015576.5
(22) Anmeldetag: 04.09.2008
(51) Int. Cl.: G06F 21/20

(54) **Onlinebankingsystem und Onlinebankingverfahren zur datentechnisch gesicherten elektronischen Kommunikation**

(30) Priorität: 25.09.2007 DE 102007045981
(71) Anmelder: Fiducia IT AG, 76227 Karlsruhe (DE)
(72) Erfinder: Kloha, Matthias, 85609 Aschheim (DE)
(74) Vertreter: Bartels & Partner

(57) **Zusammenfassung**

2. Die Erfindung betrifft ein Onlinebankingsystem (1) zur datentechnisch gesicherten elektronischen Kommunikation eines Geschäftsvorganges zwischen einer ersten Datenverarbeitungseinrichtung (10) eines ersten Teilnehmers, insbesondere eines Kunden eines Bankinstitutes, und einer zweiten Datenverarbeitungseinrichtung (20) eines zweiten Teilnehmers, insbesondere eines Rechenzentrum eines Bankinstitutes, **dadurch gekennzeichnet, dass** sowohl mindestens ein Teil der relevanten Daten des Geschäftsvorganges als auch ein dem ersten Teilnehmer zugeordnetes und in der zweiten Datenverarbeitungseinrichtung (20) gespeichertes Datum (4) mittels eines Algorithmus derart in eine Grafik (16) eingebettet sind, dass die relevanten Daten des Geschäftsvorganges und/oder das Datum (4) des ersten Teilnehmers innerhalb der Grafik (16) für eine Datenverarbeitungseinrichtung im Echtzeitbetrieb unlesbar sind, dass die Grafik (16) mit einer von der zweiten Datenverarbeitungseinrichtung (20) an die erste Datenverarbeitungseinrichtung (10) elektronisch übermittelten Abfrage einer Autorisierungszeichenfolge kombiniert ist, und dass die relevanten Daten des Geschäftsvorgangs und das Datum (4) innerhalb der Grafik (16) von dem ersten Teilnehmer zur Authentifizierung der Abfrage der Autorisierungszeichenfolge lesbar sind, sowie ein zugehöriges Onlinebankingverfahren.

## Beschreibung

Die Erfindung betrifft ein Onlinebankingsystem und ein Onlinebankingverfahren zur datentechnisch gesicherten elektronischen Kommunikation eines Geschäftsvorganges zwischen einer ersten Datenverarbeitungseinrichtung eines ersten Teilnehmers, insbesondere eines Kunden eines Bankinstitutes, und einer zweiten Datenverarbeitungseinrichtung eines zweiten Teilnehmers, insbesondere eines Rechenzentrums des Bankinstitutes.

In vielen Anwendungsfällen der Datenverarbeitung besteht das Erfordernis, geschäftliche oder sonstige Transaktionen und zugehörige Willenserklärungen wie beispielsweise Überweisungen, Lastschriften usw. über einen unsicheren Verbindungskanal wie beispielsweise das Internet abzuwickeln. Für diesen Zweck wurde für das Onlinebanking ein sogenanntes PIN/TAN-Verfahren entwickelt, bei dem der Kunde sich mittels einer ersten Datenverarbeitungseinrichtung durch Angabe einer persönlichen Identifikationsnummer (PIN) gegenüber seinem Bankinstitut identifiziert oder jedenfalls authentifiziert. Anschließend formuliert der Kunde einen Auftrag, wie beispielsweise eine Überweisung, und sendet diesen Auftrag an die zweite Datenverarbeitungseinrichtung des Bankinstitutes. Daraufhin fordert die zweite Datenverarbeitungseinrichtung im Rahmen einer Bestätigungsanfrage die Angabe einer Transaktionsnummer (TAN), mittels welcher der Bankkunde den Auftrag autorisiert.

Ein Missbrauch des bekannten Verfahrens kann insbesondere dann auftreten, wenn der Bankkunde die in der Regel bei ihm lokalisierte erste Datenverarbeitungseinrichtung nicht ausreichend gegen Hackerangriffe sichert. In diesem Fall kann ohne Wissen des Bankkunden beispielsweise ein sogenannter Computer-Trojaner auf der ersten Datenverarbeitungseinrichtung installiert sein, der sich in die Kommunikation zwischen der ersten Datenverarbeitungseinrichtung des Bankkunden und der zweiten Datenverarbeitungseinrichtung des Bankinstitutes zwischenschaltet. Eine vom Bankkunden gewünschte Überweisung kann von dem Computer-Trojaner entgegengenommen werden und im Hintergrund, für den Bankkunden nicht sichtbar, wird gegenüber dem Bankinstitut eine betrügerische Überweisung gestartet.
Die für die betrügerische Überweisung erforderliche Transaktionsnummer wird von dem Computer-Trojaner mittels einer manipulierten Bestätigungsanfrage von dem Endkunden "abgephisht". Dabei wird die Anfrage der zweiten Datenverarbeitungseinrichtung nach der TAN mit den vom Bankkunden eigentlich gewünschten Transaktionsdaten kombiniert und an den Kunden weitergeleitet. Der Kunde gibt daraufhin seine Transaktionsnummer ein, woraufhin der Computer-Trojaner die Möglichkeit hat, unter Verwendung der so "abgephischten" TAN die betrügerische Überweisung auszuführen.

Der vorliegenden Erfindung liegt die Aufgabe zugrunde, ein Onlinebankingsystem und ein Onlinebankingverfahren zur datentechnisch gesicherten elektronischen Kommunikation eines Geschäftsvorganges bereitzustellen, welche die Nachteile des Standes der Technik überwinden. In einer Ausführungsart soll das Onlinebankingsystem insbesondere gegenüber dem sogenannten "Phishing" sicherer gemacht werden.

In einer Ausführungsart ist das Problem gelöst, eine Authentifizierung der automatisierten Abfrage von Autorisierungsdaten zu ermöglichen, insbesondere die Authentizität der Abfrage von Autorisierungsdaten durch das Rechenzentrum des Bankinstitutes für den Bankkunden erkennbar zu machen ohne aufwändige digitale Signaturverfahren installieren zu müssen, und dabei sicherzustellen, dass mit den abgefragten Autorisierungsdaten nur der vom Bankkunden gewünschte Geschäftsvorgang autorisiert wird.

Das Problem ist durch das im Anspruch 1 bestimmte Onlinebankingsystem sowie durch das im nebengeordneten Anspruch bestimmte Onlinebankingverfahren gelöst. Besondere Ausführungsarten der Erfindung sind in den Unteransprüchen bestimmt.

In einer Ausführungsart betrifft die Erfindung ein Onlinebankingsystem zur datentechnisch gesicherten elektronischen Kommunikation zwischen einer ersten Datenverarbeitungseinrichtung eines ersten Teilnehmers und einer zweiten Datenverarbeitungseinrichtung eines zweiten Teilnehmers, insbesondere zwischen einer ersten Datenverarbeitungseinrichtung eines Kunden eines Bankinstitutes und einer zweiten Datenverarbeitungseinrichtung eines Rechenzentrums des Bankinstitutes. Dabei ist ein dem ersten Teilnehmer zugeordnetes, insbesondere ein der Allgemeinheit unbekanntes, und in der zweiten Datenverarbeitungseinrichtung gespeichertes Datum des ersten Teilnehmers in eine von einer Datenverarbeitungseinrichtung in einem Echtzeitbetrieb unauslesbare Grafikdatei eingebettet, und diese Grafikdatei ist zur Authentifizierung in eine von der zweiten Datenverarbeitungseinrichtung an die erste Datenverarbeitungseinrichtung elektronisch übermittelte Anfrage nach einer Autorisierungszeichenfolge eingebunden.

Bei dem Datum des ersten Teilnehmers kann es sich grundsätzlich um beliebige Daten aus dem persönlichen oder sonstigen Bereich des Teilnehmers handeln oder auch um fiktive Daten, welche der Teilnehmer zuvor festgelegt und dem zweiten Teilnehmer mitgeteilt hat. In einer Ausführungsart handelt es sich bei dem Datum beispielsweise um das Geburtsdatum des ersten Teilnehmers, um sein Kraftfahrzeugkennzeichen, oder auch um Daten, welche der erste Teilnehmer zuvor festgelegt hat, beispielsweise weil sie für ihn leicht erinnerbar und wiedererkennbar sind. In einer Ausführungsart wird das Datum zuvor, d. h. vor der Abwicklung des aktuellen Auftrags, von dem ersten Teilnehmer an die zweite Datenverarbeitungseinrichtung des zweiten Teilnehmers übermittelt.
Das Datum kann auch änderbar sein, insbesondere vom ersten Teilnehmer änderbar sein, und es kann ein alternatives, von der zweiten Datenverarbeitungseinrichtung vorgegebenes Datum oder ein vom ersten Teilnehmer vorgebbares Datum gewählt werden. Alternativ hierzu kann es sich dabei auch um Daten handeln, die bei dem zweiten Teilnehmer ohnehin schon vorliegen, beispielsweise aufgrund eines zuvor geschlossenen Dienstleistungsvertrages, wie beispielsweise eines Kontoeröffnungsvertrages.

In einer Ausführungsart authentifiziert sich der erste Teilnehmer gegenüber dem zweiten Teilnehmer, beispielsweise durch Angabe einer persönlichen Identifikationsnummer (PIN). Anschließend formuliert der erste Teilnehmer einen Auftrag, beispielsweise eine Überweisung, und sendet diesen Auftrag beispielsweise über einen Verbindungskanal im Internet an den zweiten Teilnehmer. Die zweite Datenverarbeitungseinrichtung fragt daraufhin über den Verbindungskanal und die erste Datenverarbeitungseinrichtung eine Transaktionsnummer (TAN) bei dem ersten Teilnehmer zur Autorisierung des Auftrages an.

Grundsätzlich können auch andere Autorisierungszeichenfolgen eingesetzt werden. Die Autorisierungszeichenfolgen werden in der Regel zuvor, vorzugsweise auf einem sicheren und/oder unabhängigen Übertragungskanal wie beispielsweise per Briefpost, von der zweiten Datenverarbeitungseinrichtung an den ersten Teilnehmer gesendet.
Die zweite Datenverarbeitungseinrichtung führt den vom ersten Teilnehmer formulierten Auftrag nur dann aus, wenn die auf die Anfrage hin übermittelte Autorisierungszeichenfolge mit der Autorisierungszeichenfolge oder einer der erwarteten Autorisierungszeichenfolgen übereinstimmt.

In einer Ausführungsart betrifft die Erfindung ein Onlinebankingsystem und ein zugehöriges Onlinebankingverfahren zur datentechnisch gesicherten elektronischen Kommunikation eines Geschäftsvorganges zwischen einer ersten Datenverarbeitungseinrichtung eines ersten Teilnehmers, insbesondere eines Kunden eines Bankinstitutes, und einer zweiten Datenverarbeitungseinrichtung eines zweiten Teilnehmers, insbesondere eines Rechenzentrum eines Bankinstitutes, bei dem sowohl mindestens ein Teil der relevanten Daten des Geschäftsvorganges als auch ein dem ersten Teilnehmer zugeordnetes und in der zweiten Datenverarbeitungseinrichtung gespeichertes Datum mittels eines Algorithmus derart in eine Grafik eingebettet sind, dass die relevanten Daten des Geschäftsvorganges und/oder das Datum des ersten Teilnehmers innerhalb der Grafik für eine Datenverarbeitungseinrichtung im Echtzeitbetrieb unlesbar sind, dass die Grafik mit einer von der zweiten Datenverarbeitungseinrichtung an die erste Datenverarbeitungseinrichtung elektronisch übermittelten Abfrage einer Autorisierungszeichenfolge kombiniert ist, und dass die relevanten Daten des Geschäftsvorgangs und das Datum innerhalb der Grafik von dem ersten Teilnehmer zur Authentifizierung der Abfrage der Autorisierungszeichenfolge lesbar sind.

In einer Ausführungsart modifiziert und/oder verzerrt die zweite Datenverarbeitungseinrichtung die relevanten Daten des Geschäftsvorganges, beispielsweise bei einer Überweisung den Überweisungsbetrag sowie die Bankleitzahl und Nummer des Empfängerkontos, und/oder das Datum des ersten Teilnehmers mittels eines Grafikfilters und bettet die daraus resultierende Grafikdatei in die Anfrage nach der Autorisierungszeichenfolge ein. Hierfür werden Grafikfilter eingesetzt, durch die eine Grafikdatei entsteht, die zwar grundsätzlich durch Mustererkennungsalgorithmen verarbeitet und auch entschlüsselt werden könnte, wobei allerdings der Aufwand zur Mustererkennung derart hoch ist, dass eine solche Entschlüsselung nicht im Echtzeitbetrieb möglich ist. Derartige Techniken werden beispielsweise unter dem Akronym CAPTCHA (Completely Automated Public Turing test to tell Computers and Humans Apart - "vollautomatischer öffentlicher Turing-Test, um Computer und Menschen zu unterscheiden") eingesetzt, um sicherzustellen, dass nur Menschen und keine Computerprogramme bestimmte Dienste nutzen können.

In einer Ausführungsart der vorliegenden Erfindung wird ein solches CAPTCHA zur Authentifizierung der zweiten Datenverarbeitungsanlage eingesetzt, beispielsweise um die Anfrage nach einer Autorisierungszeichenfolge gegenüber dem ersten Teilnehmer als authentisch von der zweiten Datenverarbeitungseinrichtung stammend zu kennzeichnen. Abweichend von den bekannten CAPTCHA-Verfahren ist es in einem Ausführungsbeispiel der vorliegenden Erfindung nicht erforderlich, dass die aus der CAPTCHA-Grafik auslesbaren Daten eingegeben werden müssen, um eine Aktion auszulösen.

In einer Ausführungsart sind die relevanten Daten des Geschäftsvorganges und/oder das Datum des ersten Teilnehmers in der durch die Grafikdatei bestimmten Grafik vor einem Hintergrundbild angeordnet, durch das eine automatische optische Zeichenerkennung der relevanten Daten des Geschäftsvorganges und/oder des Datums mittels einer Datenverarbeitungseinrichtung im Echtzeitbetrieb verhindert ist. Hierzu kann das Hintergrundbild regelmäßige oder unregelmäßige Muster aufweisen, die auch eine große Bandbreite von auftretenden Kontrasten aufweisen können. In einer Ausführungsart weist das Hintergrundbild eine Anordnung von vorzugsweise horizontalen und/oder vertikalen Linien auf, die eine unterschiedliche Strichstärke und/oder eine unterschiedliche Einfärbung aufweisen können. Die Grafikdatei kann dabei kombiniert werden mit einer Bildschirmmaske, welche die sonstigen Angaben des Auftrages in Klarschrift wiedergibt.

In einer Ausführungsart sind die relevanten Daten des Geschäftsvorganges und/oder das Datum des ersten Teilnehmers in der Art eines Wasserzeichens in die Grafikdatei eingebettet. In einer Ausführungsart weist das Datum des ersten Teilnehmers mehrere Zeichen auf. Die Zeichen können einen unterschiedlichen Abstand zueinander aufweisen, eine uneinheitliche Größe aufweisen, einen uneinheitlichen Kontrast zu dem sie jeweils umgebenden Hintergrundbild aufweisen, nicht geradlinig hintereinander angeordnet sein, oder auf sonstige Weise in die Grafik eingebunden sein, dass eine Zeichenerkennung durch eine Datenverarbeitungseinrichtung im Echtzeitbetrieb verhindert ist.

In einer Ausführungsart sind die relevanten Daten des Geschäftsvorganges auf die gleiche Weise in die Grafikdatei eingebettet wie das Datum des ersten Teilnehmers. In einer Ausführungsart sind die Daten des Auftrags allerdings in mindestens abschnittsweise gleichbleibender Größe und gleichbleibendem Kontrast vor dem Hintergrundmuster der Grafikdatei angeordnet, so dass die Auslesbarkeit für den ersten Teilnehmer einfach möglich ist.

In einer Ausführungsart ist die angefragte Autorisierungszeichenfolge eine von der zweiten Datenverarbeitungseinrichtung bestimmte Autorisierungszeichenfolge aus einer Menge indizierter Autorisierungszeichenfolgen. Die indizierten Autorisierungszeichenfolgen, beispielsweise 50, 100 oder mehr durchnummerierte Autorisierungszeichenfolgen, können zuvor von der zweiten Datenverarbeitungseinrichtung an den ersten Teilnehmer übersendet worden sein. Vorzugsweise wird hierzu ein sicherer Übertragungsweg gewählt, beispielsweise per Briefpost. Durch die Anfrage fordert die zweite Datenverarbeitungseinrichtung eine von ihr automatisch bestimmte Autorisierungszeichenfolge, die zuvor von der zweiten Datenverarbeitungseinrichtung ebenfalls automatisch mit dem vom ersten Teilnehmer formulierten Auftrag verknüpft wurde. Nur dann, wenn die zweite Datenverarbeitungseinrichtung genau die angefragte Autorisierungszeichenfolge erhält, wird der Auftrag ausgeführt.

In einer Ausführungsart ist die Angabe des Index in der Anfrage nach der Autorisierungszeichenfolge derart in die Grafikdatei eingebettet, dass sie von einer Datenverarbeitungseinrichtung im Echtzeitbetrieb nicht auslesbar ist. Für die Einbettung der Angabe des Index gelten die zuvor für das Datum des ersten Teilnehmers gemachten Angaben entsprechend, d. h. die Angabe des Index kann ebenfalls durch einen Grafikfilter modifiziert oder verzerrt sein, vor einem entsprechend angeordneten Hintergrundmuster angeordnet sein, in der Art eines Wasserzeichens eingebettet sein usw.

Die vorliegende Erfindung betrifft auch ein Onlinebankingverfahren gemäß dem nebengeordneten Anspruch.

In einer Ausführungsart vergleicht die zweite Datenverarbeitungseinrichtung die vom ersten Teilnehmer angegebene Autorisierungszeichenfolge mit einer vom der zweiten Datenverarbeitungseinrichtung erwarteten Autorisierungszeichenfolge, vorzugsweise mit genau einer, von der zweiten Datenverarbeitungseinrichtung zuvor bestimmten, erwarteten Autorisierungszeichenfolge oder alternativ hierzu mit einer aus einer Menge noch gültiger Autorisierungszeichenfolgen. Nur bei einem positiven Vergleichsergebnis wird ein zuvor von der ersten Datenverarbeitungseinrichtung an die zweite Datenverarbeitungseinrichtung elektronisch übermittelter Auftrag des ersten Teilnehmers ausgeführt.

In einer Ausführungsart werden in der zweiten Datenverarbeitungsanlage die relevanten Daten des Geschäftsvorgangs und/oder das Datum mit einem Grafikfilter modifiziert oder verzerrt, so dass eine im Echtzeitbetrieb einer Datenverarbeitungseinrichtung unauslesbare Grafikdatei entsteht, die an die erste Datenverarbeitungsanlage übermittelt wird.

In einer Ausführungsart ist das erfindungsgemäße Onlinebankingsystem ein Zwei-Schritt-Verfahren, wobei in einem ersten Schritt der erste Teilnehmer den Geschäftsvorgang formuliert und an den zweiten Teilnehmer überträgt, der diesen Geschäftsvorgang vorzugsweise mit genau einer vom ersten Teilnehmer abzufragenden Autorisierungszeichenfolge verknüpft, beispielsweise einer ganz bestimmten Transaktionsnummer (TAN).
Die relevanten Daten des Geschäftsvorganges werden mit dem Datum des ersten Teilnehmers verknüpft und in eine manipulativ jedenfalls in Echtzeit durch einen Computer bzw. ein Computerprogramm nicht veränderbare Grafik eingebettet. Damit hat der erste Teilnehmer nicht nur die Möglichkeit, die Daten des Geschäftsvorganges noch einmal zu kontrollieren, sondern er kann gleichzeitig anhand des in der Grafik enthaltenen Datums auch die Authentizität der Grafik und damit der Daten des Geschäftsvorganges verifizieren.

Weitere Vorteile, Merkmale und Einzelheiten der Erfindung ergeben sich aus den Unteransprüchen sowie der nachfolgenden Beschreibung, in der unter Bezugnahme auf die Zeichnungen ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein.
- Fig. 1: zeigt ein Ausführungsbeispiel eines erfindungsgemäßen Onlinebankingsystems,
- Fig. 2: zeigt die Grafik 16 der Fig. 1 in vergrößerter Darstellung.

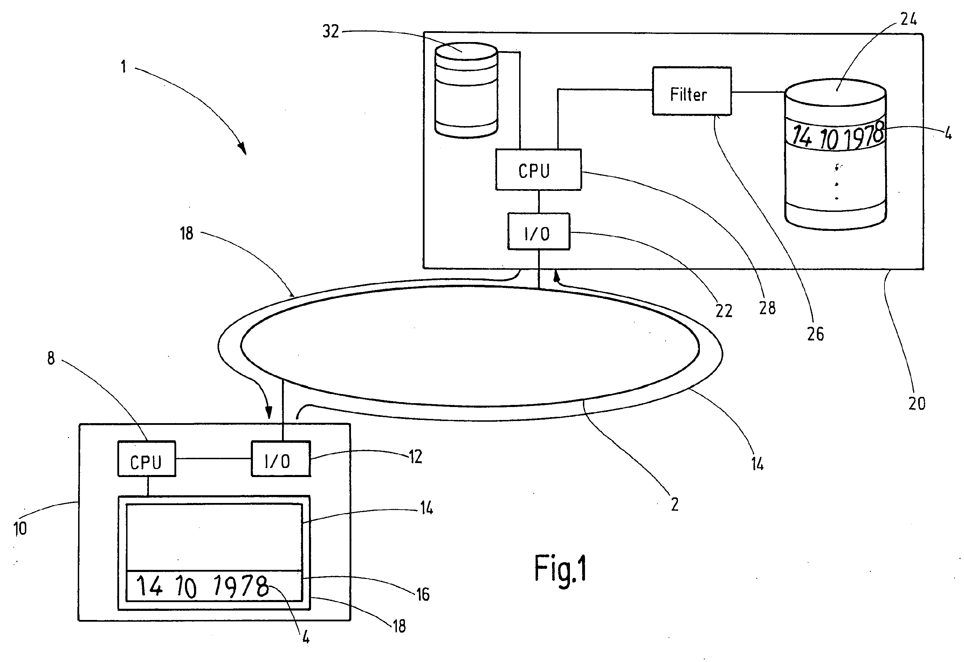

Die Fig. 1 zeigt ein Ausführungsbeispiel eines erfindungsgemäßen Onlinebankingsystems 1 zur datentechnisch gesicherten Kommunikation zwischen einer ersten Datenverarbeitungseinrichtung 10 eines Teilnehmers, insbesondere eines Kunden eines Bankinstitutes, und einer zweiten Datenverarbeitungseinrichtung 20, insbesondere eines Rechenzentrums des Bankinstitutes. Die erste und zweite Datenverarbeitungseinrichtungen 10, 20 sind über ein Datennetz 2 miteinander verbunden, beispielsweise über das Internet. Die Verbindung kann über ein sicheres Datenprotokoll aufgebaut werden, beispielsweise gemäß dem Protokoll https. Bei der ersten Datenverarbeitungseinrichtung 10 kann es sich um einen handelsüblichen Personal Computer handeln, der stationär oder mobil ist, und auf dem ein geeignetes Anwendungsprogramm zum Durchführen eines Onlinebankingverfahrens installiert ist. Die zweite Datenverarbeitungseinrichtung 20 ist in der Regel stationär und es handelt sich beispielsweise um eine Großrechenanlage oder um verteilt angeordnete Datenverarbeitungseinrichtungen eines Rechenzentrums.

Nach einem von der ersten Datenverarbeitungseinrichtung 10 ausgehenden Verbindungsaufbau wird auf einer Bildschirmeinheit der ersten Datenverarbeitungseinrichtung 10 ein Startbildschirm des Onlinebankings angezeigt. Der erste Teilnehmer gibt üblicherweise seine Kontonummer sowie eine Identifikationszeichenfolge ein, beispielsweise eine Personal Identification Number (PIN), und überträgt diese Daten über das Datennetz 2 an die zweite Datenverarbeitungseinrichtung 20. Dort werden diese Daten überprüft und bei einem positivem Vergleichsergebnis wird in der zweiten Datenverarbeitungseinrichtung 20 eine sogenannte Onlinebanking-Session eröffnet.

Daraufhin erscheint auf der Anzeigeeinheit der ersten Datenverarbeitungseinrichtung 10 eine Bildschirmmaske, auf welcher der erste Teilnehmer den von ihm gewünschten Geschäftsvorgang auswählt, im Ausführungsbeispiel einen Wertpapierkauf. Der erste Teilnehmer bestimmt das Wertpapier, die Anzahl der zu kaufenden Wertpapierstücke, ein Limit, einen Limitzusatz und gegebenenfalls weitere erforderliche oder optionale Daten. Diese Daten werden über die erste Ein-/Ausgabeeinheit 12 der ersten Datenverarbeitungseinrichtung 10 und das Datennetz 2 an die zweite Datenverarbeitungseinrichtung 20 übertragen. Von den weiteren Komponenten der ersten Datenverarbeitungseinrichtung ist nur noch die erste zentrale Recheneinheit (CPU, 8) dargestellt.

In der zweiten Datenverarbeitungseinrichtung 20 werden die Auftragsdaten 14 logisch mit einer Autorisierungszeichenfolge verknüpft, wobei die zweite Datenverarbeitungseinrichtung 20 aus einer Menge vorgegebener, insbesondere von ihr zuvor bestimmter indizierter, beispielsweise durchnummerierter Autorisierungszeichenfolgen eine bestimmte auswählt. Diese bestimmte Autorisierungszeichenfolge wird von dem ersten Teilnehmer angefordert. Nur wenn der erste Teilnehmer genau diese Autorisierungszeichenfolge mit den zuvor bestimmten Auftragsdaten verknüpft, wird der Auftrag von der zweiten Datenverarbeitungseinrichtung ausgeführt. Die indizierten Autorisierungszeichenfolgen werden vorab, d. h. vor dem aktuellen Auftrag, von der zweiten Datenverarbeitungseinrichtung 20 dem ersten Teilnehmer mitgeteilt, beispielsweise auf dem Postweg.

In der zweiten Datenverarbeitungseinrichtung 20 ist ein erster Datenspeicher 24 angeordnet, in dem ein dem ersten Teilnehmer zugeordnetes, der Allgemeinheit in der Regel unbekanntes Datum 4 des ersten Teilnehmers gespeichert ist. Dieses Datum 4 wird durch einen Grafikfilter 26 modifiziert oder verzerrt, und das Datum 4 des ersten Teilnehmers wird zusammen mit den Auftrag kennzeichnenden Daten wie beispielsweise die Wertpapierkennnummer (WKN), die Anzahl der zu kaufenden Wertpapierstücke und/oder den sich daraus ergebenden Auftragsbetrag in eine Grafik 16 umgewandelt. Im Falle einer Überweisung oder eines Dauerauftrages werden als relevante Daten des Geschäftsvorganges der Betrag sowie die Bankleitzahl und Nummer des Empfängerkontos in die Grafik 16 eingebettet. Von einer zentralen Recheneinheit CPU 28 der zweiten Datenverarbeitungseinrichtung 20 wird diese Grafik 16 bzw. die zugehörigen Grafikdaten mit den in einem zweiten Datenspeicher 32 gespeicherten Auftragsdaten verknüpft, so dass die verknüpften Daten einer Bildschirmanzeige 18 entsprechen, die über die zweite Ein-/Ausgabeeinheit 22 und das Datennetz 2 an die erste Datenverarbeitungseinrichtung 10 übertragen werden.

In der ersten Datenübertragungseinrichtung 10 wird die Bildschirmanzeige 18 dem ersten Teilnehmer angezeigt. Die Bildschirmanzeige 18 weist dabei einerseits die Auftragsdaten 14 in Klarschrift auf, und andererseits die Grafik 16, die neben den kennzeichnenden Daten des Auftrags auch das Datum 4 des ersten Teilnehmers aufweist. Der erste Teilnehmer gibt die Autorisierungszeichenfolge außerhalb der Grafik 16 ein, wobei aber die Eingabeaufforderung außerhalb der Grafik 16 keinen Index enthält, d. h. es ist dort nicht angegeben, und daher auch nicht maschinenlesbar, welche TAN von dem ersten Teilnehmer einzugeben ist.

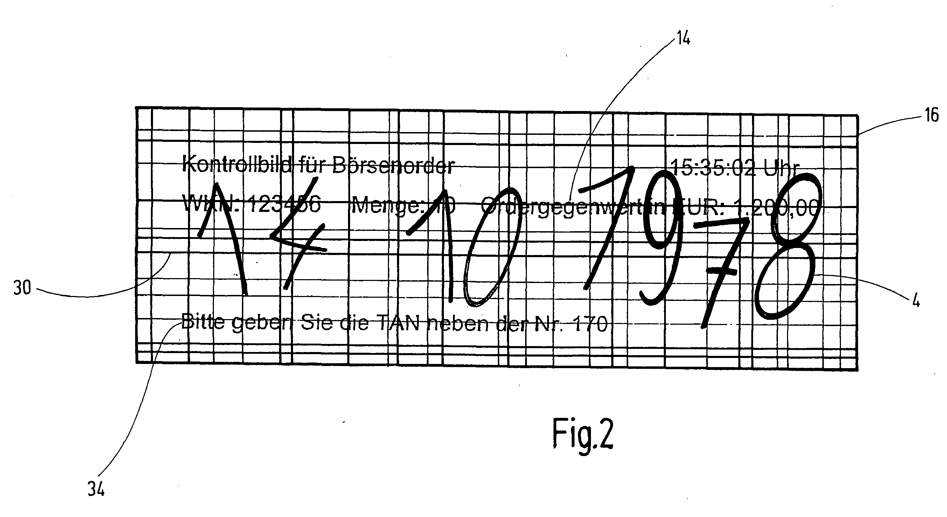

Die Fig. 2 zeigt die in der Anzeigeeinheit der ersten Datenverarbeitungseinrichtung 10 angezeigte Grafik 16 der Fig. 1 in vergrößerter Darstellung. Neben den in Reinschrift angezeigten Auftragsdaten 14 weist die Grafik 16 auch eine Aufforderung 34 zur Abgabe einer Autorisierungszeichenfolge auf, im dargestellten Ausführungsbeispiel eine Aufforderung 34 zur Abgabe einer bestimmten Transaktionsnummer (TAN). Die Auftragsdaten 14 und die Aufforderung 34 werden zwar in Reinschrift angezeigt, d. h. leicht lesbar in geradliniger Anordnung und gleichbleibender Ausrichtung und Größe, können jedoch aufgrund eines in der Grafik 16 hinterlegten Hintergrundbildes 30 nicht im Echtzeitbetrieb mittels einer Datenverarbeitungseinrichtung ausgelesen werden.

Das Hintergrundbild 30 besteht im dargestellten Ausführungsbeispiel aus einer unregelmäßigen Anordnung von vertikal und horizontal verlaufenden Linien unterschiedlicher Strichstärke und/oder in unterschiedlichen Graustufen. Alternativ oder ergänzend kann auch eine Schattierung innerhalb der Grafik 16 angeordnet sein, vorzugsweise ganzflächig, und auch die Schattierung kann ungleichmäßig sein, so dass ein automatisches Auslesen der Auftragsdaten 14 und/oder der Aufforderung 34 im Echtzeitbetrieb nicht möglich ist. Entsprechendes gilt für die Anordnung des Datums 4 des ersten Teilnehmers, im dargestellten Ausführungsbeispiel des Geburtsdatums des ersten Teilnehmers. Dies ist im üblichen Datumsformat Tag-Tag-Monat-Monat-Jahr-Jahr-Jahr-Jahr (TTMMJJJJ) angegeben, allerdings in einer von der Geradlinigkeit abweichenden Anordnung und mit unterschiedlich großen und unterschiedlich ausgerichteten einzelnen Ziffern.

Durch die Anordnung des Datums 4 innerhalb der Grafik 16 und/oder durch die Verhinderung der maschinellen Auslesbarkeit der Auftragsdaten 14 und/oder der Aufforderung 34 ist es für einen Computer-Trojaner oder allgemein für einen "man-in-the-middle" nicht möglich, die von der zweiten Datenverarbeitungseinrichtung 20 abgesendete Grafik 16, die im Betrugsfall falsche Auftragsdaten enthalten würde, derart zu manipulieren, dass dem ersten Teilnehmer vorgetäuscht werden kann, dass er mit der von ihm geforderten Autorisierungszeichenfolge den von ihm ursprünglich gegebenen Auftrag autorisiert. Vielmehr kann der Computer-Trojaner allenfalls die Grafik 16 insgesamt aus der von der zweiten Datenverarbeitungseinrichtung 20 gesendeten Datenfolge isolieren und kopieren. In diesem Fall bekommt aber der erste Teilnehmer an der Anzeigeeinheit der ersten Datenverarbeitungseinrichtung 10 angezeigt, welchen Auftrag er mit der von ihm angeforderten Autorisierungszeichenfolge tatsächlich erteilt.

In dem dargestellten Ausführungsbeispiel ist nur aus Darstellungsgründen zwischen dem ersten Datenspeicher 24 und dem zweiten Datenspeicher 32 unterschieden. Insgesamt können sowohl die Speichermittel als auch die Rechenmittel verteilt oder zentral angeordnet sein, beispielsweise kann nur logisch oder überhaupt nicht zwischen einem ersten Datenspeicher 24 und einem zweiten Datenspeicher 32 unterschieden werden.

## Patentansprüche

1. Onlinebankingsystem (1) zur datentechnisch gesicherten elektronischen Kommunikation eines Geschäftsvorganges zwischen einer ersten Datenverarbeitungseinrichtung (10) eines ersten Teilnehmers, insbesondere eines Kunden eines Bankinstitutes, und einer zweiten Datenverarbeitungseinrichtung (20) eines zweiten Teilnehmers, insbesondere eines Rechenzentrum eines Bankinstitutes, **dadurch gekennzeichnet, dass** sowohl mindestens ein Teil der relevanten Daten des Geschäftsvorganges als auch ein dem ersten Teilnehmer zugeordnetes und in der zweiten Datenverarbeitungseinrichtung (20) gespeichertes Datum (4) mittels eines Algorithmus derart in eine Grafik (16) eingebettet sind, dass die relevanten Daten des Geschäftsvorganges und/oder das Datum (4) des ersten Teilnehmers innerhalb der Grafik (16) für eine Datenverarbeitungseinrichtung im Echtzeitbetrieb unlesbar sind, dass die Grafik (16) mit einer von der zweiten Datenverarbeitungseinrichtung (20) an die erste Datenverarbeitungseinrichtung (10) elektronisch übermittelten Abfrage einer Autorisierungszeichenfolge kombiniert ist, und dass die relevanten Daten des Geschäftsvorgangs und das Datum (4) innerhalb der Grafik (16) von dem ersten Teilnehmer zur Authentifizierung der Abfrage der Autorisierungszeichenfolge lesbar sind.

2. Onlinebankingsystem (1) nach Anspruch 1, **dadurch gekennzeichnet, dass** die relevanten Daten des Geschäftsvorgangs und/oder das Datum (4) des ersten Teilnehmers durch einen Grafikfilter (26) verzerrt in die Grafik (16) eingebettet ist.

3. Onlinebankingsystem (1) nach Anspruch 1 oder einem der vorgenannten Ansprüche, **dadurch gekennzeichnet, dass** die relevanten Daten des Geschäftsvorgangs und/oder das Datum (4) des ersten Teilnehmers in der Grafik (16) vor einem Hintergrundbild (30) angeordnet ist, durch das eine optische Zeichenerkennung des Datums (4) mittels einer Datenverarbeitungseinrichtung im Echtzeitbetrieb verhindert ist.

4. Onlinebankingsystem (1) nach Anspruch 1 oder einem der vorgenannten Ansprüche, **dadurch gekennzeichnet, dass** die relevanten Daten des Geschäftsvorgangs und/oder das Datum (4) des ersten Teilnehmers in der Art eines Wasserzeichens in die Grafik (16) eingebettet ist.

5. Onlinebankingsystem (1) nach Anspruch 1 oder einem der vorgenannten Ansprüche, **dadurch gekennzeichnet, dass** die angefragte Autorisierungszeichenfolge eine von der zweiten Datenverarbeitungseinrichtung (20) bestimmte Autorisierungszeichenfolge aus einer Menge indizierter Autorisierungszeichenfolgen ist.

6. Onlinebankingsystem (1) nach Anspruch 5, **dadurch gekennzeichnet, dass** die Angabe des Index in der Anfrage nach der Autorisierungszeichenfolge derart in die Grafik (16) eingebettet ist, dass die Angabe des Index für eine Datenverarbeitungseinrichtung im Echtzeitbetrieb unlesbar ist.

7. Onlinebankingverfahren zur datentechnisch gesicherten elektronischen Kommunikation eines Geschäftsvorganges zwischen einer ersten Datenverarbeitungseinrichtung (10) eines ersten Teilnehmers, insbesondere eines Kunden eines Bankinstitutes, und einer zweiten Datenverarbeitungseinrichtung (20) eines zweiten Teilnehmers, insbesondere eines Rechenzentrum eines Bankinstitutes, **dadurch gekennzeichnet, dass** sowohl mindestens ein Teil der relevanten Daten des Geschäftsvorganges als auch ein dem ersten Teilnehmer zugeordnetes und in der zweiten Datenverarbeitungseinrichtung (20) gespeichertes Datum (4) mittels eines Algorithmus derart in eine Grafik (16) eingebettet werden, dass die relevanten Daten des Geschäftsvorganges und/oder das Datum (4) des ersten Teilnehmers innerhalb der Grafik (16) für eine Datenverarbeitungseinrichtung im Echtzeitbetrieb unlesbar sind, dass die Grafik (16) mit einer von der zweiten Datenverarbeitungseinrichtung (20) an die erste Datenverarbeitungseinrichtung (10) elektronisch übermittelten Abfrage einer Autorisierungszeichenfolge kombiniert wird, und dass die relevanten Daten des Geschäftsvorgangs und das Datum (4) innerhalb der Grafik (16) von dem ersten Teilnehmer zur Authentifizierung der Abfrage der Autorisierungszeichenfolge lesbar sind.

8. Onlinebankingverfahren nach Anspruch 7, **dadurch gekennzeichnet, dass** das Datum (4) in der zweiten Datenverarbeitungseinrichtung (20) mit einem Grafikfilter (26) verzerrt wird, so dass eine im Echtzeitbetrieb für eine Datenverarbeitungseinrichtung unlesbare Grafikdatei entsteht, die an die erste Datenverarbeitungsanlage (10) übermittelt wird.

9. Onlinebankingverfahren nach Anspruch 7 oder 8, **dadurch gekennzeichnet, dass** die zweite Datenverarbeitungseinrichtung (20) die vom ersten Teilnehmer angegebene Autorisierungszeichenfolge mit einer erwarteten Autorisierungszeichenfolge vergleicht, und dass nur bei einem positiven Vergleichsergebnis ein zuvor von der ersten Datenverarbeitungseinrichtung (10) an die zweite Datenverarbeitungseinrichtung (20) elektronisch übermittelter Auftrag des ersten Teilnehmers ausgeführt wird.
